(19) **Europäisches Patentamt**
**European Patent Office**
**Office européen des brevets**

(11) **EP 1 217 472 B1**

(12) **EUROPÄISCHE PATENTSCHRIFT**

(45) Veröffentlichungstag und Bekanntmachung des Hinweises auf die Patenterteilung:
**03.11.2010 Patentblatt 2010/44**

(51) Int Cl.:
*G05B 11/42* <sup>(2006.01)</sup>      *G05B 23/02* <sup>(2006.01)</sup>

(21) Anmeldenummer: **01128835.4**

(22) Anmeldetag: **04.12.2001**

(54) **Verfahren zur Regelung eines verzögerungsbehafteten Prozesses mit Ausgleich sowie Regeleinrichtung zur Durchführung des Verfahrens**

Method for controlling a process having delay with compensation as well as control device for carrying out the method

Procédé de commande d' un processus avec retard utilisant une compensation et dispositif pour la commande d' un tel procédé

(84) Benannte Vertragsstaaten:
**AT CH DE ES FR GB LI**

(30) Priorität: **04.12.2000 DE 10060125**

(43) Veröffentlichungstag der Anmeldung:
**26.06.2002 Patentblatt 2002/26**

(73) Patentinhaber: **SIEMENS AKTIENGESELLSCHAFT 80333 München (DE)**

(72) Erfinder: **Pfeiffer, Bernd-Markus 76199 Karlsruhe (DE)**

(56) Entgegenhaltungen:
**EP-A- 1 001 320      WO-A-98/54628**
**DE-A- 3 929 615      DE-U- 29 513 152**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 1 217 472 B1**

**Beschreibung**

Die Erfindung betrifft ein Verfahren zur Regelung eines verzögerungsbehafteten Prozesses mit Ausgleich, insbesondere zur Temperaturregelung nach dem Oberbegriff des Anspruchs 1, sowie eine Regeleinrichtung zur Durchführung des Verfahrens nach dem Oberbegriff des Anspruchs 8.

Ein adaptiver Regler für verzögerungsbehaftete Prozesse mit Ausgleich ist aus der DE-OS 39 29 615 bekannt. Er besitzt die Fähigkeit, seine Parameter selbsttätig an die sich zeitlich ändernden Eigenschaften einer Regelstrecke anzupassen. Dazu wird die Antwort des Prozesses auf eine sprungförmige Verstellung des Sollwertes aufgezeichnet und in einem iterativen Verfahren nach einem PTn-Modell gesucht, mit welchem diese Sprungantwort möglichst gut nachgebildet werden kann. Als optimal werden die Parameter des PTn-Modells angesehen, mit welchen der nach der Methode der kleinsten Fehlerquadrate berechnete Fehler zwischen den Sprungantworten des PTn-Modells und des realen Prozesses minimal ist. Nach Abschluss der Prozessidentifikation wird anhand des ermittelten Prozessmodells ein Regler nach dem Betragsoptimum entworfen. Betrachtet werden dort einschleifige Regelkreise mit Reglern vom PID-Typ. Die zu regelnden Prozesse zeigen ein Verhalten mit Ausgleich, d.h., sie stellen eine Regelstrecke dar, bei der die Sprungantwort in einen neuen Beharrungszustand einläuft.

Ein Nachteil dieses Verfahrens ist, dass bei der Inbetriebnahme des bekannten adaptiven Reglers ein oft zeitaufwendiger Sprungversuch durchgeführt werden muss, bevor der Regler optimiert werden kann. Nachteilig wirken sich dabei große Zeitkonstanten aus, d.h. Pole, die sehr nahe am Ursprung der Laplace-Ebene liegen und zu einem integratorähnlichen Verhalten des Prozesses führen, so dass nach einem Stellgrößensprung sehr lange kein stationärer Zustand erreicht wird.

Aus der WO 98/54 628 ist ein Verfahren zur Regelung eines verzögerungsbehafteten Prozesses mit Ausgleich bekannt, bei welchem zur Vermeidung dieses Nachteils die Stellgröße aus einem stationären Zustand heraus in einem gesteuerten Betrieb zunächst sprungförmig auf einen ersten konstanten Wert gesetzt wird. Nachdem ein Wendepunkt im Verlauf der Regelgröße aufgetreten ist, wird ein IT1-Modell nach einem Wendetangentenverfahren identifiziert. Die Parameter eines linearen Reglers werden in einer ersten Reglereinstellung mit einer PI-Reglerstruktur in Abhängigkeit von dem IT1-Modell eingestellt. Danach regelt der PI-Regler den Prozess in einen zweiten stationären Zustand. Nachdem der zweite stationäre Zustand näherungsweise erreicht wurde, wird ein exakteres Modell mit Ausgleich für den Prozess ermittelt und in einer zweiten Reglereinstellung werden in Abhängigkeit des exakteren Modells mit Ausgleich erneut Struktur und Parameter des linearen Reglers eingestellt. Das bekannte Regelungsverfahren hat den Nachteil, dass der PI-Regler der ersten Reglereinstellung vergleichsweise träge eingestellt werden muss, um ein Überschwingen über den zweiten stationären Zustand hinaus weitgehend auszuschließen. Zudem können erst, nachdem der zweite stationäre Zustand näherungsweise erreicht wurde, ein exakteres Modell für das Verhalten des Prozesses ermittelt und eine für dieses Modell geeignete Struktur und Parametrierung des Reglers eingestellt werden. Die Adaption des Reglers ist somit erst abgeschlossen, wenn zeitaufwendig ein zweiter stationärer Zustand angefahren wurde.

Aus dem Buch "Regelungstechnik I" von Heinz Unbehauen, Vieweg Verlag, 1992, 7. Auflage, Seiten 245 bis 247 ist ein Verfahren zur Regelung eines verzögerungsbehafteten Prozesses mit Ausgleich bekannt, bei welchem die Parameter eines PID-Reglers aus dem Anfangsverlauf der Regelgröße als Antwort auf einen Stellgrößensprung ermittelt werden. Dabei ist die Messung des Verlaufs der Regelgröße nur bis zum Wendepunkt erforderlich. Anhand von Simulationsreihen für verschiedene Prozessmodelle wurde jedoch festgestellt, dass die angegebenen Reglereinstellungen in vielen Fällen nicht zu guten Ergebnissen führen.

Der Erfindung liegt die Aufgabe zugrunde, ein Verfahren zur Regelung eines verzögerungsbehafteten Prozesses mit Ausgleich, insbesondere zur Temperaturregelung, zu finden, bei welchem lediglich der Anfangsverlauf der Regelgröße nach einer geeigneten Anregung durch eine Stellwertänderung bereits zur Einstellung geeigneter Parameter eines PID-Reglers genügt, sowie eine Regeleinrichtung zur Durchführung des Verfahrens zu schaffen.

Zur Lösung dieser Aufgabe weist das neue Verfahren der eingangs genannten Art die im kennzeichnenden Teil des Anspruchs 1 angegebenen Merkmale auf. Weiterbildungen des Verfahrens sind in den Ansprüchen 2 bis 7 beschrieben. Eine Regeleinrichtung mit den in Anspruch 8 genannten Merkmalen ist zur Durchführung des Verfahrens geeignet.

Die Erfindung hat den Vorteil, dass auf einen zeitaufwendigen Sprungversuch bei der Inbetriebnahme eines Reglers weitgehend verzichtet werden kann. Der Nachteil, dass eine vollständige Sprungantwort des Prozesses mit stationärem Anfangs- und Endzustand benötigt wird, um ein Modell zu identifizieren, wird somit vermieden. Ein derartiger Identifikationsvorgang würde bei verfahrenstechnischen Prozessen viele Stunden in Anspruch nehmen oder möglicherweise schwer durchführbar sein, weil Störungen aus anderen Anlagenteilen das Erreichen eines stationären Zustands verhindern. Durch das neue Verfahren, das mit erheblich weniger Messdaten auskommt, werden diese Probleme vermieden. Dabei genügt der Anfangsverlauf einer Sprungantwort bis zum Wendepunkt oder die Antwort der Regelgröße auf einen rechteckförmigen Impuls der Stellgröße am Arbeitspunkt aus, um einen Regler zu entwerfen. Aufwendige Versuchsreihen mit dem oben erwähnten, aus dem Buch von Unbehauen bekannten Ziegler-Nichols-Verfahren, haben gezeigt, dass es nicht universell einsetzbar ist. Die Erfindung beruht auf der neuen Erkenntnis, dass bereits aus dem Anfangsverlauf der Regelgröße bis zum Wendepunkt bei sprung- oder rechteckimpulsförmiger Anregung durch die Stellgröße die Ordnung des Prozesses abschätzbar ist. Mit dem so erhaltenen Schätzwert für die Ordnung des Prozesses ist es nun möglich, die Verstärkung des Reglers derart einzustellen, dass unabhängig von der Ordnung des Prozesses dasselbe Einschwingverhalten des Regelkreises erzielt wird. Bei einer kleineren Ordnung des Prozesses kann die Verstärkung größer eingestellt werden als bei einer höheren Prozessordnung, während bei höherer Ordnung des Prozesses die Verstärkung geringer gewählt wird. Überraschend bei dem neuen Verfahren ist, dass mit dem so eingestellten PID-Regler, der eigentlich anhand eines IT1-Modells des Prozesses, also anhand eines Modells eines Prozesses ohne Ausgleich, entworfen wurde, ein gutes Regelverhalten für einen Prozess mit Ausgleich, beispielsweise mit PTn- oder VZ2-Verhalten, erzielbar ist.

Eine Identifikation des IT1-Modells nach einem Wendetangentenverfahren an einem Arbeitspunkt hat den Vorteil, dass kein stationärer Anfangszustand vor einer Adaption des Reglers erforderlich ist. Wenn eine rechteckimpulsförmige Änderung der Stellgröße während des Prozessablaufs zulässig ist, beispielsweise eine kurzzeitige Abkühlung in einer Temperaturregelung, so kann das Verfahren auch online durchgeführt werden.

Zur Abschätzung der Ordnung kann in vorteilhafter Weise ein für PTn-Modelle analytisch exaktes Verfahren angewandt werden. Dabei sind als Ergebnis der Abschätzung auch nicht ganzzahlige Werte der Ordnung zugelassen, die beispielsweise auftreten, wenn es sich nicht um einen Prozess mit PTn-Verhalten mit gleichen Zeitkonstanten handelt, sondern um einen Prozess, der mit einem VZn-Modell mit verschiedenen Zeitkonstanten genauer beschrieben werden könnte. Auch für letzteren Prozess bietet das Verfahren somit gute Ergebnisse.

Mit empirischen Versuchsreihen wurde eine vorteilhafte Einstellung der Reglerparameter, insbesondere der Verstärkung, in Abhängigkeit der geschätzten Ordnung gefunden, mit welcher unabhängig von der Ordnung weitgehend dasselbe Einschwingverhalten des Regelkreises erreicht wurde.

In vorteilhafter Weise kann der Regler mit einer Regelzone kombiniert werden, innerhalb welcher der Regler im Automatikbetrieb arbeitet und den Prozess regelt und außerhalb welcher in einem gesteuerten Betrieb der Maximal- oder der Minimalwert der Stellgröße an den Prozess zur Verringerung der Regelabweichung angelegt wird. Damit ist ein gutes Führungsverhalten erzielbar, d.h. ein Verhalten, das praktisch keine Überschwinger bei einem Sollwertsprung zeigt, obwohl der Regler für das Ausregeln von Störungen vergleichsweise scharf eingestellt ist, d.h. Störungen sehr schnell ausregelt.

Anhand der Zeichnungen, in denen Ausführungsbeispiele der Erfindung dargestellt sind, werden im folgenden die Erfindung sowie Ausgestaltungen und Vorteile näher erläutert.

Es zeigen:

Figur 1    ein Strukturbild einer Regeleinrichtung,
Figur 2    einen Verlauf der Regelgröße als Antwort auf einen Stellgrößensprung,
Figur 3    einen Verlauf der Regelgröße als Antwort auf einen Rechteckimpuls der Stellgröße,
Figur 4    ein Diagramm zur Schätzung der Ordnung bei Stellgrößensprung und
Figur 5    ein Diagramm zur Schätzung der Ordnung bei Adaption am Arbeitspunkt.

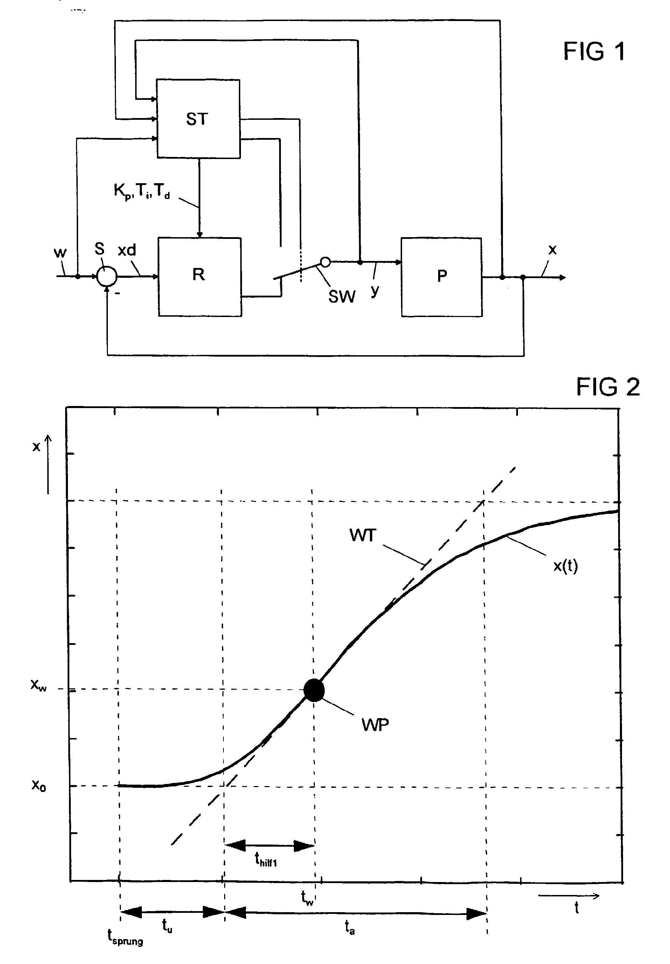

Eine Regeleinrichtung nach Figur 1 dient zur Regelung einer Regelgröße x, z.B. einer Temperatur, die an einem Prozess P gemessen wird. Ein Subtrahierglied S dient zum Vergleich der gemessenen Regelgröße x mit einem Sollwert w und bildet ein Regelabweichungssignal xd, das auf einen linearen PID-Regler mit einstellbaren Parametern geführt ist. Im geregelten Betrieb erzeugt der Regler R eine Stellgröße y für den Prozess P. Der Regelkreis ist somit geschlossen. Die Führungsgröße w, die Regelgröße x und die Stellgröße y sind einer Steuereinheit ST aufgeschaltet, die zur Identifikation des Prozesses P die Parameter eines IT1-Modells berechnet und in Abhängigkeit des Prozessmodells die Parameter des linearen PID-Reglers R einstellt. Zusätzlich erzeugt die Steuereinheit ST ein Umschaltsignal für einen Schalter SW, durch welchen zwischen gesteuertem und geregeltem Betrieb umgeschaltet werden kann.

Figur 1 stellt lediglich ein funktionelles Strukturbild einer Regeleinrichtung dar. Selbstverständlich können alle Funktionsblöcke der Regeleinrichtung in einem einzigen elektronischen Gerät zusammengefasst oder auch dezentral auf verschiedene Geräte, beispielsweise einen Personal Computer als Steuereinheit ST und einen Feldregler als Regler R, verteilt werden.

Betrachtet werden Prozesse mit Ausgleich und asymptotischem Einschwingverhalten. Sie lassen sich im allgemeinen durch ein VZn-Modell mit der Übertragungsfunktion

$$G(s) = \frac{K}{(T_1 s + 1)(T_2 s + 1)\dots(T_n s + 1)}, \quad T_1 > T_2 > \dots T_n$$

beschreiben, wenn man von Zählernullstellen einmal absieht. Die Übertragungsfunktion G(s) hat somit eine Verstärkung

K, Zeitkonstanten $T_1...T_n$ sowie eine Ordnung n. Im Folgenden wird beispielhaft von Temperaturstrecken gesprochen. Das Verfahren ist jedoch auch für andere verzögerungsbehaftete Prozesse einsetzbar.

Figur 2 zeigt den prinzipiellen Verlauf einer Regelgröße als Antwort auf eine sprungförmige Änderung einer Stellgröße y. Falls von einem solchen Prozess nur der Anfangsverlauf der Sprungantwort bis zu einem Wendepunkt WP, nicht aber der weitere Verlauf der Regelgröße x bekannt ist, können zunächst weder über eine Ausgleichszeit $t_a$ noch über die stationäre Verstärkung K Aussagen gemacht werden. Das tatsächlich dem Prozessverhalten zugrundeliegende VZn-Modell mit Ausgleich ist also nicht bekannt. Ein IT1-Modell ohne Ausgleich für einen Prozess mit Ausgleich ist zwar eine vergröbernde Annahme, hat jedoch den großen Vorteil, dass es bereits aus dem Anfangsverlauf einer Sprungantwort identifizierbar ist. Theoretisch kann das vom Anfangsverlauf her zu einem VZ2-Modell passende IT1-Modell folgendermaßen definiert werden:

$$G(s) = \frac{K_{IT1}}{s(T_{IT1}s+1)}, \quad K_{IT1} = \frac{K}{T_1}, \quad T_{IT1} = T_2$$

Mit

$K_{IT1}$      Verstärkung des IT1-Modells,
$T_{IT1}$      Zeitkonstante des IT1-Modells,
K            Verstärkung des VZ2-Modells,
$T_1, T_2$     Zeitkonstanten des VZ2-Modells.

Aus dem Anfangsverlauf einer Sprungantwort bis zum Wendepunkt WP, der durch seine zeitliche Lage $t_w$, den Wert der Regelgröße $x_w$ und die Steigung $dx_w/dt$ charakterisiert wird, lässt sich ein IT1-Modell in bekannter Weise anhand einer Verzugszeit $t_u$ und der Steigung der Wendetangente WT ermitteln.

Wie in Figur 2 verdeutlicht, wird aus der Wendetangente WT die Verzugszeit $t_u$ nach der Formel

$$t_u = t_w - t_{sprung} - t_{hilf1}, \quad t_{hilf1} = \frac{x_w - x_0}{dx_w/dt}$$

mit

$t_w$          zeitliche Lage des Wendepunkts,
$t_{sprung}$    zeitliche Lage des Stellgrößensprungs und
$t_{hilf1}$     eine Hilfsgröße

ermittelt. Damit erhält man das gesuchte IT1-Modell zu

$$G(s) = \frac{K_{IT1}}{s(T_{IT1}s+1)}, \quad K_{IT1} = \frac{dx_w/dt}{y_{max}}, \quad T_{IT1} = t_u$$

mit

$y_{max}$      Höhe des Stellgrößensprungs.

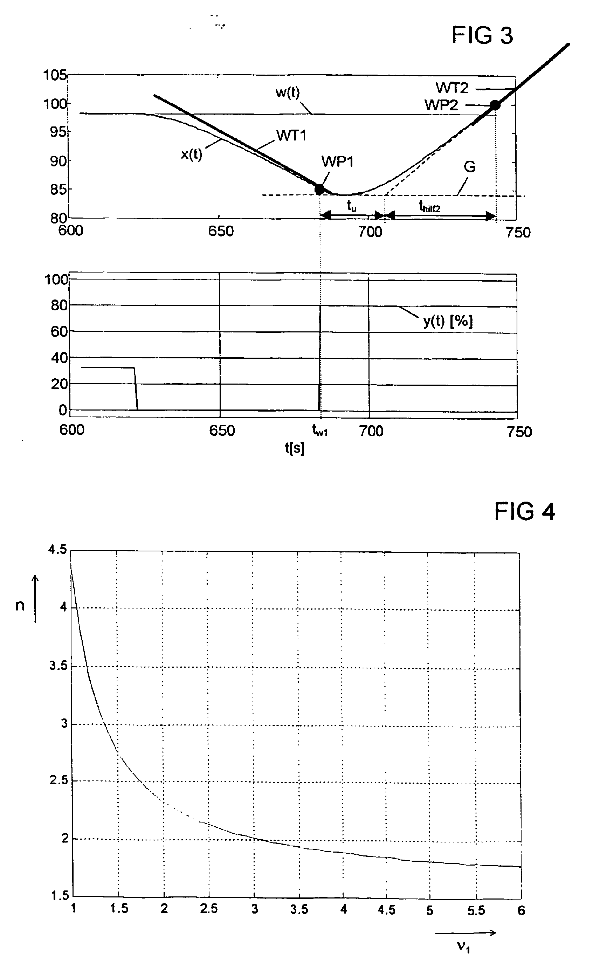

Anhand Figur 3 wird eine weitere Möglichkeit zur Identifikation eines IT1-Modells anhand eines Wendetangentenverfahrens beschrieben. Im oberen Teil von Figur 3 ist der Verlauf der Regelgröße x(t) und des Sollwerts w(t), im unteren Teil der Verlauf der Stellgröße y(t), die einer Heizleistung entspricht, dargestellt. In einem beliebigen Anfangszustand, der auch nichtstationär sein kann, wird zunächst die Heizung abgeschaltet, bis die Temperatur, die bei einer Temperaturregelung die Regelgröße x darstellt, mit maximaler Steigung abfällt. Ein erster Wendepunkt WP1 in Figur 3 markiert die Stelle maximaler negativer Steigung im Verlauf der Regelgröße x(t). Zum Zeitpunkt $t_{w1}$ des ersten Wendepunkts WP1 wird die Heizung wieder eingeschaltet, bis ein zweiter Wendepunkt WP2 gefunden wird. Entsprechend dem charakteristischen Verlauf der Regelgröße x(t) kann diese Art der Identifikation auch als "Badewannen"-Identifikation bezeichnet werden.

Die Antwort eines IT1-Modells auf einen Sprung

$$y(s) = \Delta y \frac{1}{s}$$

der Stellgröße y erhält man durch inverse Laplace-Transformation zu:

$$x(t) = x_0 + K_{IT1}T_{IT1}\Delta y\,(e^{-t/T_{IT1}} + \frac{1}{T_{IT1}}t - 1)$$

Man erkennt, dass dieses Modell für eine Stellgröße y=0 immer seinen Wert x(t)=0 konstant beibehält. Im Falle einer Temperaturregelung bedeutet das, dass keine Wärme an die Umgebung abgegeben wird. Ein realer Temperaturprozess erleidet jedoch bei Heizleistung "Null" einen Wärmeverlust, der real zwar temperaturabhängig ist, aber im Rahmen der vereinfachten Modellvorstellung als konstant während des Idenfikationsvorgangs angenommen wird. Die oben berechnete Sprungantwort wird also ergänzt um einen konstanten Wärmeverlust entsprechend der Steigung $dx_{w1}/dt$ einer ersten Wendetangente WT1 zu:

$$x(t) = x_0 + K_{IT1}T_{IT1}\Delta y\,(e^{-t/T_{IT1}} + \frac{1}{T_{IT1}}t - 1) - \left(\frac{dx_{w1}}{dt}\right)t$$

Die Steigung $dx_{w2}/dt$ am zweiten Wendepunkt WP2 setzt sich dann zusammen aus:

$$\frac{dx_{w2}}{dt} = K_{IT1}\Delta y - \left(\frac{dx_{w1}}{dt}\right)$$

Die Heizleistung muss also sowohl den Wärmeverlust abfangen als auch die neue Maximalsteigung einer zweiten Wendetangente WT2 im zweiten Wendepunkt WP2 erzwingen. Die Verstärkung $K_{IT1}$ des IT1-Modells berechnet sich daher zu:

$$K_{IT1} = \frac{\dfrac{dx_{w2}}{dt} + \left(\dfrac{dx_{w1}}{dt}\right)}{\Delta y}$$

Eine Verzugszeit $t_u$ des IT1-Modells kann analog zum klassischen Wendetangentenverfahren bestimmt werden, wenn man beachtet, dass der Stellwertsprung am ersten Wendepunkt WP1 beginnt. Der Startzeitpunkt für die Berechnung der Verzugszeit $t_u$ liegt also nicht am tiefsten Punkt der "Badewannen"-Kurve, sondern bereits am Einschaltpunkt der Heizung, welcher mit der zeitlichen Lage $t_{w1}$ des ersten Wendepunkts WP1 zusammenfällt. Der Endzeitpunkt der Verzugszeit $t_u$ wird durch den Schnittpunkt zwischen der zweiten Wendetangente WT2 und einer Geraden G bestimmt, für welche die Regelgröße x konstant gleich einem Minimalwert der Regelgröße x ist.
Aufgrund der Streuungen bei der Ermittlung der Wendepunkte WP1 und WP2 weichen die mit der "Badewannen"-Identifikation ermittelten Schätzwerte etwas von denjenigen ab, die mit dem anhand der Sprungantwort durchgeführten Wendetangentenverfahren gewonnen werden. Sie sind jedoch tendenziell eher sogar etwas genauer. Zu beachten ist, dass sich der Regler im gesteuerten Betrieb befindet, bis der zweite Wendepunkt WP2 gefunden wird, und zwar unabhängig davon, ob sich der zweite Wendepunkt WP2 oberhalb oder unterhalb des Sollwerts im Arbeitspunkt befindet. Bei Prozessen, die kritisch auf Übertemperaturen reagieren, darf ein solcher Versuch also nur an einem Sollwert durchgeführt werden, der weit genug unterhalb der kritischen Maximaltemperatur liegt.
Die Zeitkonstante $T_{IT1}$ des IT1-Modells wird wiederum gleich der Verzugszeit $t_u$ gesetzt.
Gemäß einer aus dem eingangs erwähnten Buch von Unbehauen bekannten, jedoch nicht universell einsetzbaren Reglerein stellung, können die Parameterverstärkung $K_p$, Nachstellzeit $T_i$ und Vorhaltezeit $T_d$ eines PID-Reglers mit der allgemeinen Übertragungsfunktion

$$R(s) = K_p(1 + \frac{1}{T_i \cdot s} + T_d \cdot s)$$

anhand der Parameter des IT1-Modells berechnet werden zu:

$$K_p = \frac{1.2}{K_{IT1}T_{IT1}}, \quad T_i = 2T_{IT1}, \quad T_d = 0.5T_{IT1}$$

Der feste Zusammenhang $T_i = 4T_d$ bedeutet dabei, dass beide Nullstellen des PID-Reglers aufeinander liegen.

Für Prozesse mit geringer relativer Verzugszeit $t_u$ kann die Verstärkung $K_P$ sogar noch weiter vergrößert werden als in dem Buch von Unbehauen angegeben wurde. Eine Vergrößerung um maximal den Faktor 2 ist möglich. In mehreren Simulationen für verschiedene Prozessmodelle wurde jedoch empirisch ermittelt, dass der Regelkreis bei Reglereinstellungen mit den Parametern nach Unbehauen für einen Prozess mit PTn-Verhalten und Ordnung n=2 noch gut arbeitet, für Ordnung n=3 bereits schlecht gedämpft ist und für eine Ordnung n≥4 in der Praxis völlig unbrauchbar ist. Es ist daher entscheidend, bereits in einem frühen Stadium aus dem Verlauf der Regelgröße Informationen über die Prozessordnung zu gewinnen, obwohl die Ausgleichszeit in diesem Stadium noch unbekannt ist.

Für PTn-Modelle mit der Übertragungsfunktion

$$G(s) = \frac{K}{(Ts+1)^n}, \quad 1 < n < 10$$

ist der Zeitpunkt $t_w$ des Wendepunkts im Verlauf der Regelgröße nach einem Stellgrößensprung analytisch bestimmbar zu:

$$t_w = t_u + t_{hilf1} = (n-1)T.$$

Zudem ist das Verhältnis

$$\frac{t_u}{T} = f_{tuT}(n)$$

zumindest tabellarisch in Abhängigkeit von der Prozessordnung n bekannt. Damit lässt sich zeigen, dass das bereits am Wendepunkt WP (Figur 2) messbare Verhältnis

$$v_1 = \frac{t_{hilf1}}{t_u} = \frac{t_w - t_u}{t_u} = \frac{(n-1)T}{t_u} - 1 = \frac{n-1}{\frac{t_u}{T}} - 1 = \frac{n-1}{f_{tuT}(n)} - 1$$

nur von der Ordnung n abhängt und daher ein geeignetes Maß zur Abschätzung der Ordnung darstellt. Für den relevanten Bereich 2≤n≤5 lässt sich die Funktion

$$f_{tuT}(n) \approx an + b, \quad a = 0.608, \quad b = -0.973$$

linear approximieren und die obige Gleichung zur Bestimmung des Verhältnisses $v_1$ nach n auflösen zu:

EP 1 217 472 B1

$$n = \frac{b(v_1 + 1) + 1}{-a(v_1 + 1) + 1}$$

In dem Diagramm gemäß Figur 4, in welchem $v_1$ auf der Abszisse und n auf der Ordinate aufgetragen sind, ist der Verlauf dieser Funktion anschaulich dargestellt.

Zu beachten ist, dass in der Gleichung für n auch nicht ganzzahlige Werte für n erhalten werden, beispielsweise bei Prozessen mit VZn-Verhalten mit verschiedenen Zeitkonstanten, da die Ordnung n für ein PTn-Modell des Prozesses geschätzt wurde. Für typische Temperaturstrecken mit n<2 ist das Verhältnis $v_1$>3.

Die Steigung der Wendetangente WT ist

$$\frac{dx_w}{dt} \approx \frac{K\Delta y}{t_a} = \frac{K\Delta y}{t_u} \frac{1}{\frac{t_a}{t_u}}$$

wobei das Verhältnis

$$\frac{t_a}{t_u} = f_{tatu}(n)$$

in Abhängigkeit von der Ordnung n für PTn-Modelle ebenfalls tabellarisch bekannt ist und sich für den relevanten Bereich $2 \leq n \leq 5$ durch folgende Hyperbel approximieren lässt:

$$f_{tatu}(n) = \frac{7.9826 + 0.3954(n - 1.1)}{n - 1.1}$$

Damit kann sogar die Verstärkung K des Prozesses aus dem Anfangsverlauf der Sprungantwort geschätzt werden, obwohl noch kein zweiter stationärer Zustand gemessen worden ist:

$$K = \frac{dx_w}{dt} \frac{t_u}{\Delta y} f_{tatu}(n)$$

Die Zeitkonstante T des PTn-Modells ergibt sich schließlich zu

$$T = \frac{t_w}{n - 1}$$

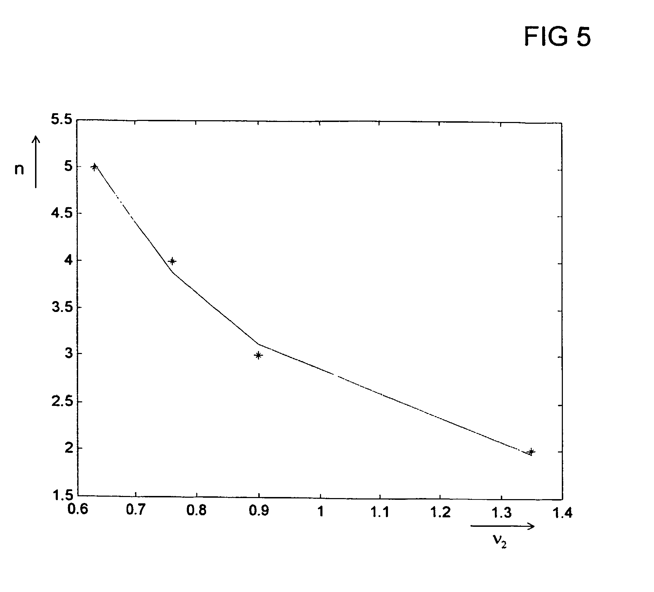

Zu beachten ist, dass die beschriebene Art der Ordnungsschätzung empfindlich gegenüber ungenauer Detektion des Wendepunkts WP, beispielsweise aufgrund von Messrauschen, ist und nur für PTn-Modelle mit gleichen Zeitkonstanten gilt. Sie ist daher an realen Prozessen mit unterschiedlichen Zeitkonstanten nicht immer zuverlässig. Eventuell wird dann für einen Prozess niedriger Ordnung ein Modell höherer Ordnung geschätzt, das jedoch den Verlauf der Regelgröße vergleichsweise gut wiedergibt und zu vernünftigen Einstellungen der Reglerparameter führt. Auch bei der Adaption am Arbeitspunkt, d.h. bei der zuvor beschriebenen "Badewannen"-Identifikation, ist ein Verhältnis $v_2$ ein Maß für die Ordnung n. Die konkreten Werte für $v_2$ weichen jedoch von den Verhältnissen $v_1$ bei einer Sprungantwort ab. Aufgrund von Simulationsreihen mit Ordnungen von 2 bis 5 und drei verschiedenen Streckenmodellen wird der in Figur 5 gezeigte, hyperbelförmige Zusammenhang

7

$$n = \frac{1.9786}{v_2 - 0.2186} + 0.2205$$

empirisch ermittelt. Wiederum sind auf der Abszisse Werte von $v_2$ und auf der Ordinate Werte von n aufgetragen. Aufgrund von Simulationsreihen mit verschiedenen Prozessmodellen und einem Reglerentwurf nach Ziegler-Nichols wird folgende Korrektur der Reglerverstärkung anhand der geschätzten Ordnung n vorgenommen:

Für n≤1,9 wird die Reglerverstärkung verdoppelt, d.h.

$$K_P = \frac{2,4}{K_{IT1} \cdot T_{IT1}},$$

Für 1,9<n<2,1 wird ein Korrekturfaktor $g_f$ nach der Gleichung berechnet:

$$g_f = -5n + 11,5,$$

so dass gilt:

$$K_P = (-5n + 11,5) \cdot \frac{1,2}{K_{IT1} \cdot T_{IT1}}$$

und

für 2,1≤n wird das aus der eingangs erwähnten DE-OS 39 29 615 bekannte Entwurfsverfahren angewandt, deren Inhalt durch Bezugnahme als Bestandteil dieser Anmeldung gelten soll.

Prinzipiell könnte selbstverständlich auch für Ordnungen n>2,1 eine weitere Abschwächung der Reglerverstärkung eines nach Ziegler-Nichols entworfenen Reglers mit ansteigender Ordnung n durchgeführt werden. Es hat sich aber empirisch herausgestellt, dass es bei Prozessen höherer Ordnung durchaus sinnvoll ist, eine exaktere Identifikation des Prozessmodells anhand der vollständigen Sprungantwort durchzuführen, da eine Identifikation lediglich anhand des Anfangsverlaufs der Sprungantwort oder eine "Badewannen"-Identifikation nicht immer zu brauchbaren Ergebnissen führt.

Da für die Identifikation des IT1-Modells und den Entwurf des Reglers nur der kurze Verlauf der Regelgröße bis zum Wendepunkt zur Verfügung steht, kommt es entscheidend auf eine Verbesserung der Robustheit gegenüber Messrauschen an. Es kommen IIR (Infinite Impuls Response)-Filter höherer Ordnung zum Einsatz, die oberhalb ihrer Bandbreite eine deutlich höhere Dämpfung aufweisen. Im Vergleich zu FIR (Finite Impuls Response)-Filtern besitzen die IIR-Filter eine wesentlich bessere Dämpfung und Flankensteilheit. Allerdings müssen bei IIR-Filtern gleicher Filterordnung zusätzlich die Vergangenheitswerte des gefilterten Signals und somit etwa die doppelte Anzahl von Werten gespeichert werden. Dabei hat sich ein Butterworth-Filter zweiter Ordnung als vorteilhaft erwiesen, da er eine weniger steile Flanke zwischen Durchlass- und Sperrbereich besitzt, schneller und mit weniger Schwingungen reagiert und gleichzeitig das Rauschen in ausreichendem Maße herausfiltert.

Die mit dem beschriebenen Verfahren entworfenen PID-Regler sind auf gutes Störverhalten optimiert und liefern bei Sollwertsprüngen Überschwinger von etwa 10 bis 20% der Sprunghöhe. Um das Auftreten von Überschwingern zu vermindern wird eine Regelzone verwendet. Eine Regelzone ist ein Band definierter Breite um den Sollwert herum. Nur innerhalb der Regelzone wird der PID-Regler im Automatikbetrieb gefahren, während außerhalb der Regelzone im gesteuerten Betrieb ein Maximal- oder Minimalwert der Stellgröße zur Verringerung einer Regelabweichung ausgegeben wird. Wenn z.B. die Temperatur bei einer Temperaturregelung zu tief ist, d.h. unterhalb der Regelzone liegt, wird die maximale Heizleistung ausgegeben. Wenn die Temperatur zu hoch ist, wird die Heizung abgeschaltet und, sofern eine Kühlung vorhanden ist, mit maximaler Leistung gekühlt.

Eine Breite c der Regelzone wird festgesetzt zu:

$$c = 2\frac{100\%}{K_P}$$

Falls mit dem Regler zwei Stellglieder angesteuert werden sollen, beispielsweise in einem Split-Range-Betrieb für Heizen und Kühlen, können unterschiedliche Reglerverstärkungen zum Einsatz kommen und die Regelzone muss entsprechend unsymmetrisch dimensioniert werden.

Anhand einer Standard-Temperaturstrecke mit den Parametern K=3, $T_1$=300 und $T_2$=20 wurde das neue Verfahren mit dem aus der eingangs erwähnten DE-OS 39 29 615 bekannten Verfahren verglichen. Dabei hat sich gezeigt, dass bei dem neuen Verfahren die Einstellung des PID-Reglers bereits am Wendepunkt, d.h. nach ca. 70 Sekunden abgeschlossen ist. Man erhält einen PID-Regler mit $K_P$=16, $T_i$=31 und $T_d$=8. Dagegen muss mit dem bekannten Verfahren zunächst die Sprungantwort vollständig erfasst werden. Die Modellidentifikation dauert somit etwa 1.200 Sekunden. Der anhand des PTn-Modells parametrierte PI-Regler hat die Parameter $K_P$=0,7 und $T_i$=326. Erst nach der Einstellung des PI-Reglers wird mit diesem der Sollwert angefahren. Die Inbetriebnahme ist somit bei dem bekannten Verfahren erst nach etwa 3.000 Sekunden abgeschlossen, so dass sich der Prozess in geregeltem Betrieb am Arbeitspunkt befindet. Der Vorteil einer erheblich schnelleren Reglereinstellung mit dem neuen Verfahren wird somit offensichtlich.

Bei einem Sollwertsprung schwingt der nach dem neuen Verfahren erhaltene PID-Regler zudem schneller ein als der nach dem bekannten Verfahren gewonnene PI-Regler. Weiterhin reduziert sich die Auswirkung einer Störung auf weniger als 10% der Regelabweichung, die von einem nach dem bekannten Verfahren erhaltenen PI-Regler zugelassen wird.

Auch bei einem Vergleich des neuen Regelverfahrens mit dem aus der WO 98/54 628 bekannten Regelverfahren wird deutlich, dass die Ersteinstellung des Reglers erheblich weniger Zeit beansprucht, da nur die Daten bis zum Wendepunkt benötigt werden und danach sofort der PID-Regler aktiviert wird, während bei dem bekannten Regelverfahren in diesem Bereich noch mit einem grob eingestellten PI-Regler gearbeitet wird. Die dabei resultierenden Regler sehen sich bei den beiden Verfahren sehr ähnlich und haben ein vergleichbares Führungsund Störverhalten.

**Patentansprüche**

1. Verfahren zur Regelung eines verzögerungsbehafteten Prozesses mit Ausgleich, insbesondere zur Temperaturregelung, wobei die Stellgröße (y) aus einem stationären Zustand heraus in einem gesteuerten Betrieb sprungförmig auf einen ersten konstanten Wert gesetzt wird,

   wobei der Verlauf der Regelgröße (x) erfasst und zumindest näherungsweise eine erste Wendetangente (WT, WT1) berechnet wird und

   wobei nach einem Wendetangentenverfahren ein IT1-Modell identifiziert wird, **dadurch gekennzeichnet,**

   **dass** in Abhängigkeit von der Verzugszeit ($t_u$) und der zeitlichen Lage ($t_w$) des Wendepunktes (WP, WP2) der zur Identifikation nach einem Wendetangentenverfahren berechneten Wendetangente (WT, WT2) die Ordnung (n) eines PTn-Modells des Prozesses (P) geschätzt wird,

   **dass** die Parameter ($K_p$, $T_i$, $T_d$) eines PID-Reglers (R) in Abhängigkeit der Parameter des IT1-Modells eingestellt werden, wobei die Verstärkung ($K_p$) des Reglers mit steigendem Schätzwert der Ordnung (n) des PTn-Modells kleiner eingestellt wird, und

   **dass** der PID-Regler (R) nach erfolgter Einstellung seiner Parameter zur Regelung des Prozesses (P) eingesetzt wird.

2. Verfahren nach Anspruch 1, **dadurch gekennzeichnet, dass** zur Identifikation des IT1-Modells nach einem Wendetangentenverfahren an einem Arbeitspunkt die Stellgröße (y), nachdem der zur ersten Wendetangente (WT1) gehörende erste Wendepunkt (WP1) im Verlauf der Regelgröße (x) erkannt wurde, auf einen zweiten konstanten Wert gesetzt wird zur Umkehrung des Vorzeichens der Steigung des Verlaufs der Regelgröße (x),

   dass der Verlauf der Regelgröße (x) erfasst und zumindest näherungsweise eine zweite Wendetangente (WT2) berechnet wird,

   dass der Extremwert der Regelgröße zwischen dem ersten Wendepunkt (WP1) und dem zur zweiten Wendetangente (WT2) gehörenden zweiten Wendepunkt (WP2) ermittelt wird,

   dass die zeitliche Lage des Schnittpunkts der zweiten Wendetangente (WT2) und einer Geraden (G), für welche die Regelgröße konstant gleich dem ermittelten Extremwert ist, bestimmt wird,

   dass die Verstärkung $K_{IT1}$ des IT1-Modells berechnet wird zu

$$K_{IT1} = \frac{\dfrac{dx_{w1}}{dt} + \dfrac{dx_{w2}}{dt}}{\Delta y}$$

mit

$dx_{w1}/dt$ - Steigung der ersten Wendetangente (WT1),

$dx_{w2}/dt$ - Steigung der zweiten Wendetangente (WT2), sowie $\Delta y$ - Sprunghöhe der Stellgröße (y) und dass die Zeitkonstante $T_{IT1}$ des IT1-Modells gleich der Differenz zwischen der zeitlichen Lage des Schnittpunktes und der zeitlichen Lage des ersten Wendepunkts (WP1) gesetzt wird.

**3.** Verfahren nach Anspruch 1, **dadurch gekennzeichnet, dass** die Ordnung n des PTn-Modells näherungsweise abgeschätzt wird nach der Formel

$$n = \frac{b(\nu_1 + 1) + 1}{-a(\nu_1 + 1) + 1}$$

mit a=0, 608, b=-0,973 und

$$\nu_1 = \frac{t_{hilf1}}{t_{u1}},$$

wobei $t_{hilf1}$ der zeitliche Abstand zwischen dem Wendepunkt (WP) der zur Identifikation nach einem Wendetangentenverfahren berechneten Wendetangente (WT) und dem Schnittpunkt dieser Wendetangente mit einer Geraden, für welche die Regelgröße konstant gleich dem Wert des stationären Zustands ist,
$t_{u1}$ der zeitliche Abstand zwischen diesem Schnittpunkt und dem Zeitpunkt ist, zu welchem die Stellgröße sprungförmig auf den ersten konstanten Wert gesetzt wurde.

**4.** Verfahren nach Anspruch 2, **dadurch gekennzeichnet, dass** die Ordnung n des PTn-Modells näherungsweise abgeschätzt wird nach der Formel

$$n = \frac{1,9786}{\nu_2 - 0,2186}$$

mit

$$\nu_2 = \frac{t_{hilf2}}{t_{u2}},$$

wobei $t_{hilf2}$ der zeitliche Abstand zwischen dem Wendepunkt (WP2) der zur Identifikation nach einem Wendetangentenverfahren berechneten Wendetangente (WT2) und dem Schnittpunkt dieser Wendetangente (WT2) mit einer Geraden (G), für welche die Regelgröße konstant gleich dem ermittelten Extremwert ist, und
$t_{u2}$ der zeitliche Abstand zwischen diesem Schnittpunkt und dem ersten Wendepunkt (WP1) ist.

**5.** Verfahren nach einem der vorhergehenden Ansprüche, **dadurch gekennzeichnet, dass** die Parameter-Nachstellzeit $T_i$ und Vorhaltezeit $T_d$ des PID-Reglers (R) für n≤2,1 eingestellt werden zu
$T_i = 2T_{IT1}$ und

$T_d = 0,5 T_{IT1}$
mit
$T_{IT1}$ - Zeitkonstante des identifizierten IT1-Modells und dass der Parameter Verstärkung $K_p$ eingestellt wird zu

$$K_p = \frac{2,4}{K_{IT1} \cdot T_{IT1}}$$

für n≤1, 9,

$$K_p = (-5n + 11,5) \cdot \frac{1,2}{K_{IT1} \cdot T_{IT1}}$$

für 1,9<n≤2,1
mit
$K_{IT1}$ - Verstärkung des identifizierten IT1-Modells und
dass für n>2,1 ein vollständiger Sprungversuch zur Identifikation eines PTn-Modells des Prozesses durchgeführt und die Parameter des PID-Reglers (R) nach dem Betragsoptimum eingestellt werden.

**6.** Verfahren nach einem der vorhergehenden Ansprüche,
**dadurch gekennzeichnet, dass** der PID-Regler (R) innerhalb einer Regelzone, d.h. wenn sich die Regelgröße (x) innerhalb eines Bandes definierter Breite um den Sollwert (w) befindet, den Prozess (P) im Automatikbetrieb regelt und
dass außerhalb der Regelzone zur Verringerung der Regelabweichung der Maximalwert oder der Minimalwert der Stellgröße (y) in einem gesteuerten Betrieb eingestellt wird.

**7.** Verfahren nach Anspruch 6, **dadurch gekennzeichnet, dass** eine Breite c der Regelzone nach der Formel

$$c = 2\frac{100\%}{K_p}$$

mit $K_P$ - Reglerverstärkung
eingestellt wird.

**8.** Regeleinrichtung zur Durchführung eines Verfahrens nach einem der vorhergehenden Ansprüche mit einem linearen Regler (R), dessen Parameter einstellbar sind und der eine von der Regelabweichung (xd) abhängige Stellgröße (y) erzeugt,
mit einem Schalter (SW) zur wahlweisen Aufschaltung der vom linearen Regler (R) erzeugten Stellgröße in einem geregelten Betrieb oder einer vorgebbaren Stellgröße in einem gesteuerten Betrieb auf den Prozess (P) und
mit einer Steuereinheit (ST), durch welche die Stellgröße (y) aus einem stationären Zustand heraus in einem gesteuertem Betrieb sprungförmig auf einen ersten konstanten Wert gesetzt wird,
der Verlauf der Regelgröße (x) erfasst und zumindest näherungsweise eine erste Wendetangente (WT) berechnet wird und nach einem Wendetangentenverfahren ein IT1-Modell identifiziert wird, **dadurch gekennzeichnet, dass** in Abhängigkeit von der Verzugszeit ($t_u$) und der zeitlichen Lage ($t_w$) des Wendepunktes (WP, WP2) der zur Identifikation nach einem Wendetangentenverfahren berechneten Wendetangente (WT, WT2) die Ordnung (n) eines PTn-Modells des Prozesses (P) geschätzt wird,
**dass** die Parameter ($K_p$, $T_i$, $T_d$) eines PID-Reglers in Abhängigkeit der Parameter des IT1-Modells eingestellt werden, wobei die Verstärkung ($K_p$) des Reglers (R) mit steigendem Schätzwert der Ordnung (n) kleiner eingestellt wird, und dass der PID-Regler (R) nach erfolgter Einstellung seiner Parameter zur Regelung des Prozesses (P) eingesetzt wird.

**Claims**

1. Method for the closed-loop control of a time-lagged process with compensation, in particular for closed-loop temperature control, wherein the manipulated variable (y) is abruptly set, starting from a steady-state condition, to a first constant value in an open-loop controlled mode,
wherein the curve of the controlled variable (x) is detected and a first inflexional tangent (WT, WT1) is at least approximately calculated and
wherein an IT1 model is identified according to an inflexional tangent method, **characterised in that,**
as a function of the time lag ($t_u$) and the time position ($t_w$) of the point of inflexion (WP, WP2) of the inflexional tangent (WT, WT2) calculated for identification according to an inflexional tangent method, the order (n) of a PTn model of the process (P) is estimated,
**in that** the parameters ($K_p$, $T_i$, $T_d$) of a PID controller (R) are adjusted as a function of the parameters of the IT1 model, wherein the gain ($K_p$) of the closed-loop controller is adjusted so as to decrease as the estimated value of the order (n) of the PTn model increases and
**in that** the PID controller (R) is used, after the adjustment of its parameters is complete, for the closed-loop control of the process (P).

2. Method according to claim 1, **characterised in that** to identify the IT1 model according to an inflexional tangent method, after the first point of inflexion (WP1) associated with the first inflexional tangent (WT1) in the curve of the controlled variable (x) has been detected, the manipulated variable (y) at a working point is set to a second constant value to invert the sign of the gradient of the curve of the controlled variable (x),
**in that** the curve of the controlled variable (x) is detected and a second inflexional tangent (WT2) is at least approximately calculated,
**in that** the extreme value of the controlled variable between the first point of inflexion (WP1) and the second point of inflexion (WP2) associated with the second inflexional tangent (WT2) is determined,
**in that** the time position of the point of intersection of the second inflexional tangent (WT2) and a straight line (G), for which the controlled variable is constantly equal to the determined extreme value, is defined,
**in that** the gain $K_{IT1}$ of the IT1 model is calculated to be

$$K_{IT1} = \frac{\dfrac{dx_{w1}}{dt} + \dfrac{dx_{w2}}{dt}}{\Delta y}$$

where
$dx_{w1}/dt$ is the gradient of the first inflexional tangent (WT1), $dx_{w2}/dt$ is the gradient of the second inflexional tangent (WT2), and
$\Delta y$ is the step-change height of the manipulated variable (y) and
**in that** the time constant $T_{IT1}$ of the IT1 model is set so as to be equal to the difference between the time position of the point of intersection and the time position of the first point of inflexion (WP1).

3. Method according to claim 1, **characterised in that** the order n of the PTn model is estimated approximately according to the formula

$$n = \frac{b(v_1 + 1) + 1}{-a(v_1 + 1) + 1}$$

where

a=0.608,
b=-0.973 and

$$v_1 = \frac{t_{hilf1}}{t_{u1}}$$

wherein $t_{hilf1}$ is the time interval between the point of inflexion (WP) of the inflexional tangent (WT) calculated for identification according to an inflexional tangent method and the point of intersection of this inflexional tangent with a straight line, for which the controlled variable is constantly equal to the value of the steady-state condition, $t_{u1}$ is the time interval between this point of intersection and the time at which the manipulated variable was abruptly set to the first constant value.

4. Method according to claim 2, **characterised in that** the order of the PTn model is estimated approximately according to the formula

$$n = \frac{1.9786}{v_2 - 0.2186}$$

where

$$v_2 = \frac{t_{hilf2}}{t_{u2}}$$

wherein $t_{hilf2}$ is the time interval between the point of inflexion (WP2) of the inflexional tangent (WT2) calculated for identification according to an inflexional tangent method and the point of intersection of this inflexional tangent (WT2) with a straight line (G) for which the controlled variable is constantly equal to the determined extreme value, and $t_{u2}$ is the time interval between this point of intersection and the first point of inflexion (WP1).

5. Method according to any one of the preceding claims, **characterised in that** the parameter reset time $T_i$ and rate time $T_d$ of the PID controller (R) are adjusted for n≤2.1 to
Ti=2$T_{IT1}$ and
$T_d$=0.5$T_{IT1}$
where
$T_{IT1}$ is the time constant of the identified IT1 model and **in that** the parameter gain $K_p$ is adjusted to

$$K_p = \frac{2.4}{K_{IT1} \cdot T_{IT1}}$$

for n≤1.9,

$$K_p = (-5h + 11.5) \cdot \frac{1.2}{K_{IT1} \cdot T_{IT1}}$$

for 1.9<n≤2.1 where
$K_{IT1}$ is the gain of the identified IT1 model and

13

**in that** for n>2.1 a complete step-change attempt to identify a PTn model of the process is carried out and the parameters of the PID controller (R) are adjusted according to the absolute-value optimum.

6. Method according to any one of the preceding claims, **characterised in that** the PID controller (R), within a control region, i.e. when the controlled variable (x) is located within a band of defined width about the setpoint value (w), controls the process (P) in automatic mode and
**in that**, outside the control region, the maximum value or the minimum value of the manipulated variable (y) is adjusted in an open-loop control mode to reduce the system deviation.

7. Method according to claim 6, **characterised in that** a width c of the control region is adjusted according to the formula

$$c = 2\frac{100\%}{Kp}$$

where Kp is the controller gain.

8. Closed-loop control device for carrying out a method according to any one of the preceding claims, comprising a linear closed-loop controller (R) whose parameters are adjustable and which generates a manipulated variable (y) that is dependent on the system deviation (xd),
comprising a switch (SW) for optionally applying the manipulated variable generated by the linear closed-loop controller (R) in a closed-loop controlled mode or a predefinable manipulated variable in an open-loop controlled mode to the process (P) and
comprising an open-loop control unit (ST), by means of which the manipulated variable (y) is abruptly set in an open-loop controlled mode to a first constant value, starting from a steady-state condition,
the curve of the controlled variable (x) is detected and a first inflexional tangent (WT) is at least approximately calculated and according to an inflexional tangent method an IT1 model is identified,
**characterised in that** as a function of the time lag ($t_u$) and the time position ($t_w$) of the point of inflexion (WP, WP2) of the inflexional tangent (WT, WT2) calculated for identification according to an inflexional tangent method, the order (n) of a PTn model of the process (P) is estimated,
**in that** the parameters ($K_p$, $T_i$, $T_d$) of a PID controller are adjusted as a function of the parameters of the IT1 model, wherein the gain ($K_p$) of the closed-loop controller (R) is adjusted so as to decrease as the estimated value of the order (n) increases, and **in that** the PID controller (R) is used, after the adjustment of its parameters is complete, for the closed-loop control of the process (P).

**Revendications**

1. Procédé de régulation d'un processus avec retard utilisant une compensation, notamment pour la régulation de la température, la grandeur (y) réglante étant mise à partir d'un état stationnaire dans un fonctionnement commandé à une première valeur constante,
dans lequel on relève la courbe de la grandeur ( x ) réglée et on calcule au moins approximativement une première tangente ( WT, WT1 ) d'inflexion et
dans lequel on identifie un modèle IT1 par un procédé par tangente d'inflexion, **caractérisé**
**en ce qu'**on évalue, en fonction du temps ( $t_u$ ) de retard et de la position ( $t_w$ ) dans le temps du point ( WP, WP2 ) d'inflexion de la tangente ( WT, WT2 ) d'inflexion, calculée pour l'identification par un procédé par tangente d'inflexion, l'ordre ( n ) d'un modèle PTn du processus ( P ),
**en ce qu'**on règle les paramètres ( $K_p$, $T_i$, $T_d$ ) d'un régulateur ( R ) PID en fonction des paramètres du modèle IT1, l'amplification ( $K_p$ ) du régulateur étant réglée au fur et à mesure qu'augmente la valeur d'évaluation de l'ordre ( n ) du modèle PTn, et
**en ce qu'**on utilise le régulateur ( R ) PID après avoir effectué le réglage de ses paramètres pour la régulation du processus ( P ).

2. Procédé suivant la revendication 1, **caractérisé en ce que**, pour l'identification du modèle IT1 par un procédé par tangente d'inflexion, on met sur une deuxième valeur constante en un point de travail la grandeur ( y ) réglante, après avoir détecté dans la courbe de la grandeur ( x ) réglée, le premier point ( WP1 ) d'inflexion appartenant à la première tangente ( WT1 ) d'inflexion, pour inverser le signe de la pente de la courbe de la grandeur ( x ) réglée,
**en ce qu'**on détecte la courbe de la grandeur ( x ) réglée et on calcule au moins approximativement une deuxième tangente ( WT2 ) d'inflexion,
**en ce qu'**on détermine la valeur extrême de la grandeur réglée entre le premier point ( WP1 ) d'inflexion et le deuxième point ( WP2 ) d'inflexion appartenant à la deuxième tangente ( WT2 ) d'inflexion,
**en ce qu'**on détermine la position dans le temps du point d'intersection de la deuxième tangente ( WT2 ) d'inflexion et d'une droite ( G ), pour laquelle la grandeur réglée est constante en étant égale à la valeur d'extrémité déterminée,
**en ce qu'**on calcule l'amplification du modèle IT1 par

$$K_{IT1} = \frac{\dfrac{dx_{w1}}{dt} + \dfrac{dx_{w2}}{dt}}{\Delta y}$$

avec

$dx_{w1}/dt$ - pente de la première tangente ( WT1 ) d'inflexion,
$dx_{w2}/dt$ - pente de la deuxième tangente ( WT2 ) d'inflexion, ainsi que
$\Delta y$ - hauteur du saut de la grandeur ( y ) réglante, et

**en ce qu'**on met la constante $T_{IT1}$ de temps du modèle IT1 à une valeur égale à la différence entre la position dans le temps du point d'intersection et la position dans le temps du premier point ( WP1 ) d'inflexion.

**3.** Procédé suivant la revendication 1, **caractérisé en ce qu'**on évalue l'ordre n du modèle PTn approximativement par la formule

$$n = \frac{b(\nu_1 + 1) + 1}{-a(\nu_1 + 1) + 1}$$

avec a=0, 608, b=-0,973 et

$$\nu_1 = \frac{t_{hilf1}}{t_{u1}},$$

dans laquelle $t_{hilf1}$ est le laps de temps entre le point ( WP ) d'inflexion de la tangente ( WT ) d'inflexion calculée pour l'identification suivant un procédé par tangente d'inflexion et le point d'intersection de cette tangente d'inflexion avec une droite, pour laquelle la grandeur réglée est constante en étant égale à la valeur de l'état stationnaire, $t_{u1}$ est le laps de temps en ce point d'intersection et l'instant auquel la grandeur réglante a été mise en forme de saut à la première valeur constante.

**4.** Procédé suivant la revendication 2, **caractérisé en ce qu'**on évalue approximativement l'ordre n du modèle PTn par la formule

$$n = \frac{1,9786}{\nu_2 - 0,2186}$$

avec

$$\nu_2 = \frac{t_{hilf2}}{t_{u2}},$$

dans laquelle $t_{hilf2}$ est le laps de temps entre le point ( WP2 ) d'inflexion de la tangente ( WT2 ) d'inflexion calculée pour l'identification par un procédé par tangente d'inflexion et le point d'intersection de cette tangente ( WT2 ) d'inflexion avec une droite ( G ), pour laquelle la grandeur réglée est constante en étant égale à la valeur extrême déterminée, et $t_{u2}$ est le laps de temps entre ce point d'intersection et le premier point ( WP1 ) d'inflexion.

5. Procédé suivant l'une des revendications précédentes, **caractérisé en ce que** le temps $T_i$ de compensation de paramètre et le temps $T_d$ de dérivation du régulateur ( R ) PID sont réglés pour $n \leq 2,1$ à
$T_i = 2T_{IT1}$ et
$T_d = 0,5T_{IT1}$
avec
$T_{IT1}$ - constante de temps du modèle IT1 identifié et
**en ce que** l'amplification $K_p$ de paramètre est réglé à

$$K_p = \frac{2,4}{K_{IT1} \cdot T_{IT1}}$$

pour $n \leq 1,9$

$$K_p = (-5n + 11,5) \cdot \frac{1,2}{K_{IT1} \cdot T_{IT1}}$$

pour $1,9 < n \leq 2,1$
avec
$K_{IT1}$ - amplification du modèle IT1 identifié et
**en ce que**, pour $n > 2,1$, on effectue un essai de saut complet pour l'identification d'un modèle PTn du processus et on règle les paramètres du régulateur ( R ) PID par l'optimum en valeur absolue.

6. Procédé suivant l'une des revendications précédentes, **caractérisé en ce que** le régulateur PID règle le processus ( P ) en fonctionnement automatique dans une zone de régulation, c'est-à-dire lorsque la grandeur ( x ) réglée se trouve dans une bande de largeur définie autour de la valeur ( w ) de consigne et
**en ce qu'**à l'extérieur de la zone de régulation, pour diminuer l'écart de régulation, la valeur maximum ou la valeur minimum de la grandeur ( y ) réglante est établie dans un fonctionnement commandé.

7. Procédé suivant la revendication 6, **caractérisé en ce qu'**une largeur c de la zone de régulation est réglée par la formule
avec $K_p$ - amplification du régulateur.

8. Dispositif de régulation pour effectuer un procédé suivant l'une des revendications précédentes, comprenant un régulateur ( R ) linéaire, dont les paramètres sont réglables et qui produit une grandeur ( y ) réglante, qui dépend de l'écart ( xd ) de régulation,
un commutateur ( SW ), pour appliquer au choix la grandeur réglante produite par le régulateur ( R ) linéaire dans un fonctionnement régulier ou une grandeur réglante pouvant être prescrite dans un fonctionnement commandé au processus ( P ) et
une unité ( ST ) de commande, par laquelle la grandeur ( y ) réglante est mise à partir d'un état stationnaire dans un fonctionnement commandé en forme de saut à une première valeur constante,
on relève la courbe de la grandeur ( x ) réglée et on calcule au moins approximativement une première tangente ( WT, WT1 ) d'inflexion et on identifie un modèle IT1 par un procédé par tangente d'inflexion, **caractérisé en ce qu'**on évalue, en fonction du temps ( $t_u$ ) de retard et de la position ( $t_w$ ) dans le temps du point ( WP, WP2 ) d'inflexion de la tangente ( WT, WT2 ) d'inflexion calculée pour l'identification par un procédé par tangente d'inflexion, l'ordre ( n ) d'un modèle PTn du processus ( P ),
**en ce qu'**on règle les paramètres ( $K_p$, $T_i$, $T_d$ ) d'un régulateur ( R ) PID en fonction des paramètres du modèle IT1, l'amplification ( $K_p$ ) du régulateur étant réglée au fur et à mesure qu'augmente la valeur d'évaluation de l'ordre ( n ) du modèle PTn, et en ce qu'on utilise le régulateur ( R ) PID après avoir effectué le réglage de ses paramètres pour la régulation du processus ( P ).

FIG 1

FIG 2

## FIG 3

## FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3929615 A
- WO 9854628 A